# EUROPÄISCHE PATENTSCHRIFT

(11) **EP 0 820 795 B1**
(45) Veröffentlichungstag und Bekanntmachung des Hinweises auf die Patenterteilung: **21.03.2001**
(21) Anmeldenummer: 97890133.8
(22) Anmeldetag: 10.07.1997
(51) Int. Cl.: B01D 3/24, B01D 3/10, B01D 1/22

(54) **Verfahren zur Behandlung einer Flüssigkeit, insbesondere zur Trennung unterschiedlicher in der Flüssigkeit enthaltener Bestandteile und Vorrichtung hierfür**
Process for the treatment of a liquid particularly for the separation of different components contained in the liquid and device therefor
Procédé de traitement d'un liquide en particulier de séparation de composants différents contenus dans le liquide et dispositif pour cela

(30) Priorität: 23.07.1996 AT 132696
(43) Veröffentlichungstag der Anmeldung: 28.01.1998
(73) Patentinhaber: Schrems, Martin, Dr., 1190 Wien (AT)
(72) Erfinder: Schrems, Martin, Dr., 1190 Wien (AT)
(74) Vertreter: Atzwanger, Richard, Dipl.-Ing. Patentanwalt

(56) Entgegenhaltungen:
- EP-A- 0 066 790
- WO-A-94/25132
- DE-A- 2 927 661
- GB-A- 1 215 870
- US-A- 3 003 930
- US-A- 3 969 183
- US-A- 4 521 276
- US-A- 4 790 911

## Beschreibung

Die gegenständliche Erfindung betrifft ein Verfahren zur Behandlung einer Flüssigkeit, insbesondere zur Trennung unterschiedlicher in dieser enthaltener Bestandteile, zur Entfernung von Schadstoffen aus derselben oder zur Entkeimung derselben durch Einbringen der Flüssigkeit in mindestens einen Unterdruckbehälter, in welchem ein Teil derselben verdampft wird und der restliche Teil derselben aus dem Unterdruckbehälter abgeführt wird, wobei die Flüssigkeit im Unterdruckbehälter unter Wirkung der Schwerkraft auf mindestens eine fest angeordnete Fläche strömt, auf welcher sich ein Flüssigkeitsfilm ausbildet, aus welchem die dampfförmige Phase austritt.

Aus der AT-A-377 244 ist es bekannt, aus einer Flüssigkeit dadurch Schadstoffe zu entfernen, daß diese Flüssigkeit in einen Unterdruckbehälter eingesprüht wird. Hierdurch werden diejenigen in der Flüssigkeit enthaltenen Bestandteile, welche einen niedrigeren Siedepunkt als die Flüssigkeit selbst aufweisen, verdampft, wodurch die angestrebte Trennung bewirkt wird. Durch dieses Verfahren können weiters dadurch, daß sich azeotrope Gemische bilden, Schadstoffe, deren Siedepunkt höher als derjenige der Flüssigkeit ist, mit der dampfförmigen Phase aus der Flüssigkeit abgezogen werden.

Dieses bisher bekannte Verfahren entspricht jedoch mehrfach nicht den gestellten Erfordernissen:
Da zur Erzielung der angestrebten geringen Größe der Tröpfchen die Flüssigkeit mit einem hohen Druck durch eine Sprühdüse hindurchgeführt werden muß, muß hierfür eine Pumpe vorgesehen sein. Hierdurch wird ein zusätzlicher Aufwand bei der Errichtung einer Anlage zur Durchführung des Verfahrens bedingt. Zudem werden durch diese Pumpe weitere Betriebskosten verursacht.
Da weiters bei diesem Verfahren die Flüssigkeit nach oben ausgesprüht wird, kollidieren die ausgesprühten Tröpfchen mit den abfallenden Tröpfchen, wodurch sie sich zu vergrößerten Tröpfchen vereinigen. Hierdurch wird der Wirkungsgrad dieses Verfahrens verschlechtert.

Da weiters die ausgesprühten Tröpfchen nur durch kurze Zeit hindurch dem Unterdruck ausgesetzt sind und sich dann am Boden des Behälters sammeln, wirkt der im Behälter bestehende Unterdruck nur auf denjenigen Teil der Flüssigkeit, welcher sich an der Oberfläche der im Behälter gesammelten Flüssigkeit befindet, wodurch gleichfalls ein nur geringer Wirkungsgrad erzielbar ist.

Aus der DE-A-29 27 661, der WO 94/25132 und der EP-A-66 790 sind weiters Vorrichtungen bekannt, welche Behälter aufweisen, in deren unter Unterdruck stehenden Innenraum Flüssigkeiten eingeleitet werden, welche im Behälter behandelt, insbesondere eingedampft, werden sollen. Hierfür strömen diese Flüssigkeiten längs innerhalb der Behälter angeordneter, vertikal ausgerichteter Flächen ab, wobei sie dem Unterdruck ausgesetzt sind.
Diese bekannten Vorrichtungen weisen jedoch deshalb einen sehr schlechten Wirkungsgrad auf, da diejenigen Flächen, längs welcher die Flüssigkeiten abströmen, vertikal ausgerichtet sind, wodurch die Flüssigkeiten jeweils nur einer kurzen Verweildauer ausgesetzt sind.

Die US-A-3 003 930 offenbart gleichfalls ein Verfahren zur Behandlung von Flüssigkeit, nämlich zur Entfernung von in dieser enthaltenen flüchtigen Bestandteilen, jedoch wird bei diesem Verfahren kein Unterdruck zur Anwendung gebracht.

Die US-A-4 521 276 offenbart ebenfalls ein derartiges Verfahren, wobei jedoch ebensowenig Vakuum zur Anwendung gebracht wird. Vielmehr werden gemäß diesem Verfahren absorbierende Materialien eingesetzt, wodurch ein sehr großer technischer Aufwand bedingt wird.
Die US-A-4 790 911 offenbart ein derartiges Verfahren, bei welchem zwar ein Unterdruck zur Anwendung gebracht wird. Allerdings erfordert dieses Verfahren die Anordnung eines Rotors zur Erzeugung des Vakuums im Innenraum des Behälters. Durch einen derartigen beweglichen Bestandteil wird gleichfalls ein sehr großer technischer Aufwand bedingt.
Die US-A-3 969 183 offenbart schließlich ein Verfahren, gemäß welchem die Flüssigkeit auf ein bewegtes Band aufgebracht wird. Auch hierfür ist ein besonderer technischer Aufwand erforderlich.

Der gegenständlichen Erfindung liegt demgegenüber die Aufgabe zugrunde, ein Verfahren und eine Vorrichtung zu schaffen, durch welche mit geringem technischen Aufwand Flüssigkeit behandelt und insbesondere von flüchtigen Bestandteilen befreit werden kann, wobei nicht nur ein hoher Mengendurchsatz erzielt werden soll, sondern vielmehr dadurch eine schonende Behandlung der Flüssigkeit gewährleistet werden soll, daß eine mechanische Belastung der Flüssigkeit vermieden wird. Dies wird erfindungsgemäß dadurch erzielt, daß die Flüssigkeit durch schlitzförmige Spalte hindurch auf mehrere ebene Flächen strömt, welche horizontal oder schräg abfallend bzw. schräg ansteigend geneigt ausgebildet sind, wobei deren Neigungswinkel gegenüber der Horizontalen maximal 10° beträgt, und auf welchen die Flüssigkeitsfilme dem Unterdruck ausgesetzt werden.

Durch dieses Verfahren werden auf den ebenen Flächen dünne Schichten an Flüssigkeit erzeugt, aus welchen die flüchtigen Bestandteile unter Wirkung des Unterdruckes austreten:
Da mehrere derartige Flächen vorgesehen sind, wird ein sehr großer Mengendurchsatz erreicht. Da keine mechanisch bewegten Bestandteile erforderlich sind, ist der technische Aufwand äußerst gering, wodurch ein sehr gutes Kosten-Leistungsverhältnis erzielt wird. Da schließlich die Flüssigkeit keiner mechanischen Beanspruchung unterzogen wird, wird eine Schädigung von in dieser enthaltenen Bestandteilen vermieden. Es trifft dies insbesondere z.B. für Milch und Fruchtsäfte zu, deren Inhaltsstoffe, wie Vitamine, andernfalls geschädigt werden könnten.

Eine Vorrichtung zur Durchführung des erfindungsgemäßen Verfahrens weist einen Behälter auf, welcher mit mindestens einem Zuflußrohr für das Zuströmen der Flüssigkeit, mindestens einem an den Boden anschließenden Abflußrohr für das Abströmen der sich im Behälter sammelnden Flüssigkeit und mindestens einem an dessen oberen Bereich anschließenden Absaugrohr für den Anschluß an eine Unterdruckquelle ausgebildet ist, wobei im Behälter mehrere ebene Flächen angeordnet sind, die horizontal oder schräg abfallend geneigt bzw. schräg ansteigend geneigt ausgebildet sind, auf welche die durch das mindestens eine Zuflußrohr fließende Flüssigkeit durch schlitzförmige Spalte hindurch gelangt, wobei deren Neigungswinkel gegenüber der Horizontalen maximal 10° beträgt. Dabei können der Neigungswinkel der Flächen und die Spalte in ihrer Breite einstellbar sein.

Das erfindungsgemäße Verfahren und die erfindungsgemäße Vorrichtung sind nachstehend anhand mehrerer in der Zeichnung dargestellter Ausführungsbeispiele näher erläutert. Es zeigen:
- die Fig. 1 und 1a: eine erste Ausführungsform einer erfindungsgemäßen Vorrichtung, in vertikalem Schnitt bzw. im Schnitt längs der Linien A-B, und
- die Fig. 2 und 3: zwei weitere Ausführungsformen von erfindungsgemäßen Vorrichtungen, jeweils in vertikalem Schnitt.

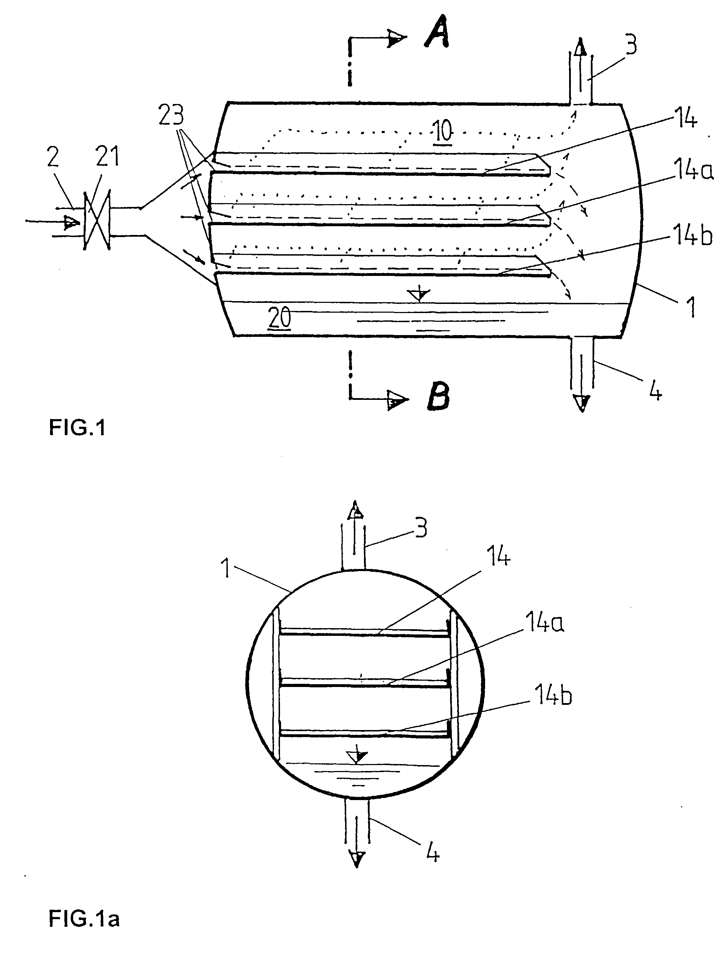

Die Vorrichtung gemäß Fig. 1 besteht aus einem Behälter 1, welcher mit einer Zuflußleitung 2, einer Absaugleitung 3 und einer Abströmleitung 4 ausgebildet ist. In der Zuflußleitung 2 befindet sich ein Steuerventil 21. In der Absaugleitung 3 befindet sich eine Saugpumpe, durch welche im Innenraum 10 des Behälters 1 ein Unterdruck erzeugt wird. Als Saugpumpe kann eine Vakuumpumpe verwendet werden. In der Abströmleitung 4 befindet sich eine Pumpe, durch welche sich am Boden des Behälters 1 ansammelnde Flüssigkeit 20 aus diesem abgefördert wird. Der im Behälter 1 erzeugte Unterdruck wird bei der gegebenen Temperatur so gewählt, daß er nahe dem Siededruck der Flüssigkeit liegt, welcher z.B. bei Wasser bzw. wasserhältigen Flüssigkeiten und einer Raumtemperatur von 20 ° C bei etwa 23 mbar bis 24 mbar liegt.

Die über die Abströmleitung 4 abgeführte dampfförmige Phase wird einem Kondensator zugeführt, in welchem sie in eine flüssige Phase übergeführt wird. Soferne dabei die Saugleistung des Kondensators hinreichend groß ist, kann auf die Einschaltung der Saugpumpe verzichtet werden.

Der Behälter 1 ist mit drei schlitzförmigen Zuströmöffnungen 23 ausgebildet, an welchen die Zuflußleitung 2 mündet und an welche drei ebene Flächen 14, 14a und 14b anschließen, längs welcher der Flüssigkeitsfilm abströmt. Dadurch, daß mehrere Einlaßspalte 23 vorgesehen sind, wird bei einer gleichen Größe des Behälters 1 ein vergrößerter Durchsatz an Flüssigkeit ermöglicht.

Die Wirkungsweise dieser Vorrichtung ist wie folgt:
Durch die Leitung 2 wird in den Behälter 1 eine Flüssigkeit, welche von Schadstoffen gereinigt oder welche entkeimt werden soll, eingeleitet. Diese Flüssigkeit gelangt in den Bereich der drei ebenen Flächen 14, 14a und 14b längs welcher sie strömt. Mittels der Saugpumpe wird im Innenraum 10 des Behälters 1 ein Unterdruck erzeugt. Durch den auf die längs der Flächen 14, 14a und 14b abströmenden Flüssigkeitsfilme einwirkenden Unterdruck treten Anteile dieser Flüssigkeit in die dampfförmige Phase über. Dies sind insbesondere in Wasser enthaltene Schadstoffe, deren Siedepunkt geringer ist, als derjenige des Wassers. Aufgrund der molekularen Verbindung mit Schadstoffen, der sogenannten Azeotropie, können diese auch mit den gasförmigen Molekülen der Flüssigkeit aus dieser abgeführt werden. Die abgezogene dampfförmige Phase wird in dem anschließenden Kondensator in die flüssige Phase übergeführt.

Weiters werden durch die explosionsartige Volumensvergrößerung, welche beim Übergang von Anteilen der Flüssigkeit in die dampfförmige Phase bewirkt wird, Bakterien zerstört, wodurch auch eine Entkeimung der Flüssigkeit bewirkt wird. Dadurch, daß der Unterdruck auf die über die Flächen abströmenden Flüssigkeitsfilme zur Wirkung kommt, wodurch der Unterdruck auf eine große Oberfläche einwirkt bzw. da diese Flüssigkeitsfilme über eine relativ lange Zeitspanne dem Unterdruck ausgesetzt sind, wird ein sehr hoher Wirkungsgrad erzielt. Aufgrund der schonenden Behandlung der Flüssigkeit wird diese nicht geschädigt, wodurch mittels dieses Verfahrens auch gegenüber mechanischen Beanspruchungen empfindliche Flüssigkeiten, wie Milch oder Fruchtsäfte, sterilisiert werden können.

Die sich am Boden des Behälters 1 sammelnde Flüssigkeit 20, welche von Schadstoffen befreit bzw. entkeimt ist, wird durch die Abströmleitung 4 hindurch abgeleitet.

Es wird darauf verwiesen, daß die im Behälter 1 vorgesehenen Flächen, welchen die Flüssigkeit zugeführt wird und auf welchen sich ein Flüssigkeitsfilme ausbilden, auch horizontal ausgerichtet oder von der Zuströmseite weg geringfügig ansteigend oder abfallend ausgebildet sein können.

Die Neigung dieser Flächen kann bis zu 10° gegenüber der Horizontalen betragen. Maßgeblich zur Erzielung eines hohen Wirkungsgrades ist, daß innerhalb des Behälters 1 Flüssigkeitsfilme mit einer sehr großen Oberfläche erzeugt werden, auf welche der im Behälter 1 bestehende Unterdruck möglichst lange einwirkt.

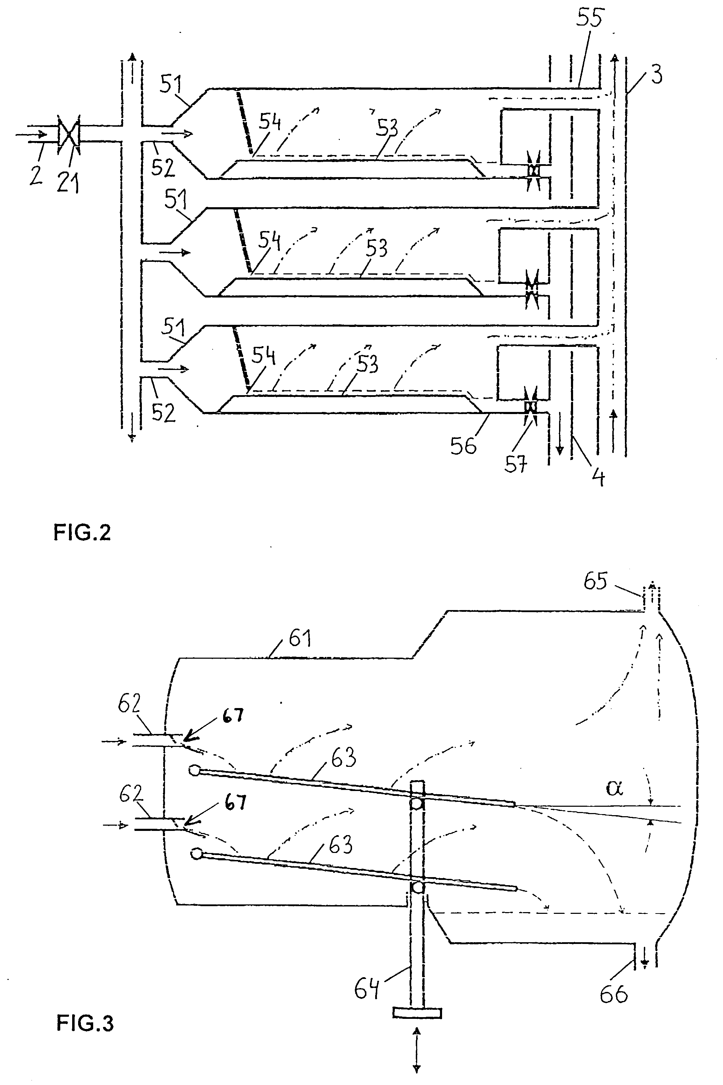

In Fig. 2 ist eine derartige Vorrichtung dargestellt, bei welcher drei angenähert horizontal ausgerichtete zylindrische Behälter 51 vorgesehen sind, welchen über eine gemeinsame Zuflußleitung 2, in welcher sich ein Ventil 21 befindet, über einzelne Leitungen 52 eine Flüssigkeit zugeführt wird. In den Behältern 51 befinden sich ebene, leicht abfallende oder leicht ansteigende Flächen 53, welchen über jeweils einen Spalt 54 die Flüssigkeit zuströmt. Durch den in den Behältern 51 bestehenden Unterdruck tritt die dampfförmige Phase aus den auf den Flächen befindlichen, dünnen Flüssigkeitsfilmen aus und wird sie über Absaugleitungen 55 der gemeinsamen Absaugleitung 3 zugeführt. Demgegenüber strömt die gereinigte Flüssigkeit über Leitungen 56, in welche sich Ventile 57 befinden, in die gemeinsame Abströmleitung 4 ab.

In Fig. 3 ist eine derartige Vorrichtung dargestellt, bei welcher ein einziger Behälter 61 vorgesehen ist, welcher mit zwei Zuflußrohren 62 mit Spalten 67 ausgebildet ist. Im Behälter 61 befinden sich zwei Abströmflächen 63, welche an einem Ende gelenkig gelagert sind und welchen im Abstand von der gelenkigen Lagerung eine vertikal bewegliche Stelleinrichtung 64 zugeordnet ist. Durch die Stelleinrichtung 64 ist der Winkel α, unter welchem die Abströmflächen 63 gegenüber der Horizontalen geneigt sind, einstellbar. Der Behälter 61 ist weiters mit einer Absaugleitung 65 ausgebildet, durch welche hindurch die aus den sich an den Abströmflächen 63 ausbildenden Flüssigkeitsfilmen austretende dampfförmige Phase abgesaugt wird. Zudem ist der Behälter 61 mit einer Leitung 66 ausgebildet, durch welche hindurch die gereinige Flüssigkeit abströmt.

Der Winkel α der Abströmflächen 53 bzw. 63 gegenüber der Horizontalen beträgt dabei maximal 10°.

Mittels des erfindungsgemäßen Verfahrens bzw. der erfindungsgemäßen Vorrichtung kann in einfacher Weise eine Reinigung von Flüssigkeiten, insbesondere von Wasser, durch Entfernung von in diesen enthaltenen Schadstoffen bewirkt werden. Zudem können hierdurch Flüssigkeiten entkeimt werden.

Insbesondere können mit diesem Verfahren in einfacher Weise Kohlenwasserstoffe, wie Phenole, Aromate und chlorierte Kohlenwasserstoffe, aus Wasser abgesondert werden. Zudem können mit diesem Verfahren in Wasser enthaltene Anteile an Erdöl entfernt werden, was insbesondere bei der Gewinnung von Trinkwasser durch Aufbereitung von Meerwasser von Bedeutung ist.
In allen Fällen können die durch Verdampfung abgeschiedenen Bestandteile nachfolgend kondensiert und einer weiteren Verwendung zugeführt werden.

Da dabei nur ein Anteil von etwa 0.1 Promille des Wassers mitverdampft wird, wird mit einem vergleichsweise geringen Energieeinsatz ein sehr hoher Wirkungsgrad erzielt. Zudem ist das erfindungsgemäße Verfahren deshalb besonders vorteilhaft, da es eine schonende Behandlung von Flüssigkeiten ermöglicht, wodurch mit diesem Verfahren z.B. Milch und Fruchtsäfte entkeimt werden können, ohne daß deren Schädigung verursacht wird.

## Patentansprüche

1. Verfahren zur Behandlung einer Flüssigkeit, insbesondere zur Trennung unterschiedlicher in dieser enthaltener Bestandteile, zur Entfernung von Schadstoffen aus derselben oder zur Entkeimung derselben durch Einbringen der Flüssigkeit in mindestens einen Unterdruckbehälter, in welchem ein Teil derselben verdampft wird und der restliche Teil derselben aus dem Unterdruckbehälter abgeführt wird, wobei die Flüssigkeit im Unterdruckbehälter unter Wirkung der Schwerkraft auf mindestens eine fest angeordnete Fläche strömt, auf welcher sich ein Flüssigkeitsfilm ausbildet, aus welchem die dampfförmige Phase austritt, dadurch gekennzeichnet, daß die Flüssigkeit durch schlitzförmige Spalte (23; 54; 67) hindurch auf mehrere ebene Flächen (14; 53; 63) strömt, welche horizontal oder schräg abfallend bzw. schräg ansteigend geneigt ausgebildet sind, wobei deren Neigungswinkel gegenüber der Horizontalen maximal 10° beträgt, und auf welchen die Flüssigkeitsfilme dem Unterdruck ausgesetzt werden.

2. Vorrichtung zur Durchführung des Verfahrens nach Patentanspruch 1, mit einem Behälter (1; 51; 61), welcher mit mindestens einem Zuflußrohr (2; 62) für das Zuströmen der Flüssigkeit, mindestens einem an den Boden anschließenden Abflußrohr (4; 64) für das Abströmen der sich im Behälter sammelnden Flüssigkeit und mindestens einem an dessen oberen Bereich anschließenden Absaugrohr (3; 65) für den Anschluß an eine Unterdruckquelle ausgebildet ist, dadurch gekennzeichnet, daß im Behälter mehrere ebene Flächen (14; 53; 63) angeordnet sind, die horizontal oder schräg abfallend geneigt bzw. schräg ansteigend geneigt ausgebildet sind, auf welche die durch das mindestens eine Zuflußrohr (2; 62) fließende Flüssigkeit durch schlitzförmige Spalte (23; 54; 67) hindurch gelangt, wobei deren Neigungswinkel gegenüber der Horizontalen maximal 10° beträgt.

3. Vorrichtung nach Patentanspruch 2, dadurch gekennzeichnet, daß der Neigungswinkel der Flächen (14; 53; 63) einstellbar ist.

4. Vorrichtung nach einem der Patentansprüche 2 oder 3, dadurch gekennzeichnet, daß die Spalte (23; 54; 67) in ihrer Breite einstellbar sind.

## Claims

1. A process for treating a liquid, in particular for separating different constituents contained therein, for removing contaminants therefrom or for sterilisation thereof by introducing the liquid into at least one negative pressure vessel, in which part thereof is vaporised and the remaining part thereof is drained off from the negative pressure vessel, the liquid in the negative pressure vessel flowing under the action of gravity onto at least one stationarily arranged surface, on which there forms a liquid film, from which the vapour phase escapes, characterised in that the liquid flows through slot-like gaps (23; 54; 67) onto a plurality of flat surfaces (14; 53; 63), which are horizontal or slope upwards or downwards, the angle of inclination thereof to horizontal being at most 10°, and on which the liquid films are exposed to the negative pressure.

2. A device for performing the process according to claim 1, having a vessel (1; 51; 61) which comprises at least one inlet pipe (2; 62) for inflow of the liquid, at least one outlet pipe (4; 64) connected to the base for outflow of the liquid collecting in the vessel and at least one suction pipe (3; 65) connected to the upper area thereof for connection to a negative pressure source, characterised in that a plurality of flat surfaces (14; 53; 63) are arranged in the vessel, which are horizontal or slope upwards or downwards and onto which the liquid flowing through the at least one inlet pipe (2; 62) passes via slot-like gaps (23; 54; 67), the angle of inclination thereof to horizontal being at most 10°.

3. A device according to claim 2, characterised in that the angle of inclination of the surfaces (14; 53; 63) is adjustable.

4. A device according to one of claims 2 or 3, characterised in that the gaps (23; 54; 67) are of adjustable width.

## Revendications

1. Procédé de traitement d'un liquide, notamment pour séparer différents constituants contenus dans celui-ci, pour éliminer des substances nocives de ce liquide ou pour le décontaminer par introduction du liquide dans au moins un récipient sous pression, dans lequel une partie du liquide est évaporée et la partie restante de celui-ci est évacuée du récipient sous pression, le liquide dans le réservoir sous pression s'écoulant, sous l'effet de la force de gravité, sur au moins une surface disposée fixement sur laquelle se forme une pellicule de liquide de laquelle s'échappe la phase sous forme de vapeur, caractérisé en ce que le liquide s'écoule à travers des interstices (23 ; 54 ; 67) en forme de fentes sur plusieurs surfaces planes (14 ; 53 ; 63), qui sont horizontales ou qui sont inclinées de manière à descendre ou monter obliquement, leur angle d'inclinaison par rapport à l'horizontale étant de 10 degrés au maximum, et sur lesquelles les pellicules de liquide sont soumises à une dépression.

2. Dispositif pour la mise en oeuvre du procédé selon la revendication 1, comportant un récipient (1 ; 51 ; 61) qui comporte au moins un tube d'arrivée (2 . 62) pour l'arrivée du liquide, au moins un tube d'évacuation (4 . 64), se raccordant au fond, pour l'évacuation du liquide recueilli dans le récipient, et au moins un tube d'aspiration (3 ; 65), se raccordant à sa partie supérieure, pour le raccordement à une source de dépression, caractérisé en ce que dans le récipient sont prévues plusieurs surfaces planes (14 ; 53 ; 63) qui sont horizontales ou qui sont inclinées de manière à descendre ou à monter obliquement, sur lesquelles le liquide, s'écoulant à travers au moins un tube d'arrivée (2 ; 62), parvient à travers des interstices (23 ; 54 ; 67) en forme de fentes, leur angle d'inclinaison par rapport à l'horizontale étant de 10 degrés au maximum.

3. Dispositif selon la revendication 2, caractérisé en ce que l'angle d'inclinaison des surfaces (14 ; 53 ; 63) est réglable.

4. Dispositif selon l'une des revendications 2 ou 3, caractérisé en ce que la largeur des interstices (23 ; 54 ; 67) est réglable.
